# EUROPEAN PATENT APPLICATION

(11) **EP 4 844 679 A1**
(43) Date of publication of application: **25.11.2026**
(21) Application number: 26181090.7
(22) Date of filing: 26.05.2026
(51) Int. Cl.: G06T 7/00, G06T 11/60

(54) **GEOMETRY-AWARE BOREHOLE IMAGE AUGMENTATION**

(30) Priority: 23.05.2025 US 202519217070
(71) Applicant: Services Pétroliers Schlumberger, 75007 Paris (FR); GeoQuest Systems B.V., 2514 JG The Hague (NL)
(72) Inventor: MARTINEZ, Francisco Alamilla, Houston, 77042 (US); SILVA, Thiago M. D., 330 18 Rio de Janeiro (BR)
(74) Representative: Schlumberger Intellectual Property Department

(57) **Abstract**

A method for augmenting an interpreted borehole image includes receiving an image of a borehole. The method also includes rotating the image to produce a rotated image. The image is rotated along a central longitudinal axis of the borehole. The method also includes modifying the image to produce a modified image. Modifying the image includes increasing or decreasing a number of rows in the image while a width of the image and a number of columns in the image remain constant. The method also includes reflecting the image to produce a reflected image. Reflecting the image includes reversing an order of the rows and/or the columns of the image.

## Description

### Background

Wellbore imaging is used in the industry to give in-depth geological information about wells for the oil and gas (O&G) industry. It allows for the extraction of features as bedding orientation, fracture characterization, and textural analysis among others. A drawback of this technique is that images are taken with a resolution of 0.2 inches, and most wells are hundreds or thousands of feet long. As a result, it is very time-consuming for a specialist to process these images.

Due to the time-consuming nature of this process and the relatively low availability of data, large labeled datasets are hard to come by, in particular, when dealing with deep learning algorithms to extract the most information from these images using AI. The labels represent a geometric feature of the well, including the angle perpendicular to the borehole well, the azimuth angle relative to the geographical north, and a classification, which depicts the nature of the feature. Conventional image augmentation techniques that use resizing, skewing, rotation, and cropping cannot be directly applied to borehole images as they do not preserve image features and labels values become invalid as the geometry of such features changes. Therefore, what is needed is an improved system and method for augmenting borehole images.

### Summary

A method for augmenting an interpreted borehole image includes receiving an image of a borehole. The method also includes rotating the image to produce a rotated image. The image is rotated along a central longitudinal axis of the borehole. The method also includes modifying the image to produce a modified image. Modifying the image includes increasing or decreasing a number of rows in the image while a width of the image and a number of columns in the image remain constant. The method also includes reflecting the image to produce a reflected image. Reflecting the image includes reversing an order of the rows and/or the columns of the image.

A computing system is also disclosed. The computing system includes one or more processors and a memory system. The memory system includes one or more non-transitory computer-readable media storing instructions that, when executed by at least one of the one or more processors, cause the computing system to perform operations. The operations include receiving an image. The image is of a borehole. The image has been interpreted and comprises a label. The label includes a type of a feature, an apparent azimuth, an apparent inclination, a center depth, a dip height, or a combination thereof. The operations also include rotating the image to produce a rotated image. The image is rotated along a central longitudinal axis of the borehole. The image includes a plurality of rows and a plurality of columns. Rotating the image causes a left-most of the columns to become a right-most of the columns. An angular displacement for the apparent azimuth is equal to a width of each of the columns. The apparent azimuth of the label is rotated by a same angle as the image is rotated. The operations also include modifying the image to produce a modified image. The image is modified before or after the image is rotated. Modifying the image includes increasing or decreasing a number of the rows while a width of the image and a number of the columns remain constant. Modifying the image displaces the center depth of the label proportionally. Modifying the image expands or contracts the dip height of the label proportionally. The operations also include reflecting the image to produce a reflected image. The image is reflected before or after the image is rotated. The image is reflected before or after the image is modified. Reflecting the image includes reversing an order of the rows and/or the columns of the image. Reflecting the image reflects the label accordingly.

A non-transitory computer-readable medium is also disclosed. The medium stores instructions that, when executed by one or more processors of a computing system, cause the computing system to perform operations. The operations include receiving an image. The image is of a borehole. The image has been interpreted and includes a label. The label includes a type of a feature, an apparent azimuth, an apparent inclination, a center depth, a dip height, or a combination thereof. The operations also include rotating the image to produce a rotated image. The image is rotated along a central longitudinal axis of the borehole. The image includes a plurality of rows and a plurality of columns. Rotating the image causes a left-most of the columns to become a right-most of the columns. An angular displacement for the apparent azimuth is equal to a width of each of the columns. The apparent azimuth of the label is rotated by a same angle as the image is rotated. The operations also include modifying the image to produce a modified image. The image is modified before or after the image is rotated. Modifying the image includes increasing or decreasing a number of the rows while a width of the image and a number of the columns remain constant. Modifying the image displaces the center depth of the label proportionally. Modifying the image expands or contracts the dip height of the label proportionally. Modifying the image includes expanding the image. Expanding the image includes inserting an empty row between each adjacent pair of the rows and then spline interpolating. Expanding the image increases the dip height. Modifying the image also or instead includes contracting the image. Contracting the image includes creating a kernel that averages sequential ones of the rows. Contracting the image decreases the dip height. The operations also include reflecting the image to produce a reflected image. The image is reflected before or after the image is rotated. The image is reflected before or after the image is modified. Reflecting the image includes reversing an order of the rows and/or the columns of the image. Reflecting the image reflects the label accordingly. Reflecting the image includes performing left-right mirroring along a vertical edge of the image. Performing the left-right mirroring rotates the apparent azimuth of the borehole in the image by 360 degrees minus the apparent azimuth of the label. Reflecting the image also or instead includes performing up-down mirroring along a horizontal edge of the image. Performing the up-down mirroring comprises rotating the apparent azimuth of the label by 180 degrees. The centered depth in the modified label is determined proportionally to a distance to a minimum depth and a maximum depth of the image.

It will be appreciated that this summary is intended merely to introduce some aspects of the present methods, systems, and media, which are more fully described and/or claimed below. Accordingly, this summary is not intended to be limiting.

### Brief Description of the Drawings

The accompanying drawings, which are incorporated in and constitute a part of this specification, illustrate embodiments of the present teachings and together with the description, serve to explain the principles of the present teachings. In the figures:
**Figure 1** illustrates an example of a system that includes various management components to manage various aspects of a geologic environment, according to an embodiment.
**Figure 2** illustrates data augmentation rotation operations performed on a first image (e.g., of a dog) and on a second image (e.g., of a borehole), according to an embodiment.
**Figure 3** illustrates data augmentation contraction and expansion operations on the first image (e.g., of the dog) and on the second image (e.g., of the borehole), according to an embedment.
**Figure 4** illustrates borehole image rotation, according to an embodiment.
**Figure 5** illustrates the transition from a first graph (e.g., showing bimodal distribution with means at 180 and 270 degrees) to a second graph (e.g., showing unimodal distribution in the range from 0 to 360 degrees, according to an embodiment.
**Figure 6** illustrates borehole image modification (e.g., expansion and/or contraction), according to an embodiment.
**Figure 7** illustrates a graph showing three normal distributions in the range of 0 to 90 degrees, according to an embodiment.
**Figure 8** illustrates three cylinders intersecting the same planar feature, according to an embodiment. The cylinders represent the borehole in different inclinations (e.g., dotted, solid, and dashed), and their corresponding effect(s) on the images (e.g., compressed, original, and expanded).
**Figure 9** illustrates borehole image reflection, according to an embodiment.
**Figure 10** illustrates the rotation, modification, and reflection of the borehole image to produce a plurality of augmented images, according to an embodiment.
**Figure 11** illustrates a flowchart of a method for augmenting an interpreted borehole image, according to an embodiment.
**Figure 12** illustrates a schematic view of a computing system for performing at least a portion of the method(s) described herein, according to an embodiment.

### Detailed Description

Reference will now be made in detail to embodiments, examples of which are illustrated in the accompanying drawings and figures. In the following detailed description, numerous specific details are set forth in order to provide a thorough understanding of the invention. However, it will be apparent to one of ordinary skill in the art that the invention may be practiced without these specific details. In other instances, well-known methods, procedures, components, circuits, and networks have not been described in detail so as not to unnecessarily obscure aspects of the embodiments.

It will also be understood that, although the terms first, second, etc. may be used herein to describe various elements, these elements should not be limited by these terms. These terms are only used to distinguish one element from another. For example, a first object or step could be termed a second object or step, and, similarly, a second object or step could be termed a first object or step, without departing from the scope of the present disclosure. The first object or step, and the second object or step, are both, objects or steps, respectively, but they are not to be considered the same object or step.

The terminology used in the description herein is for the purpose of describing particular embodiments and is not intended to be limiting. As used in this description and the appended claims, the singular forms "a," "an" and "the" are intended to include the plural forms as well, unless the context clearly indicates otherwise. It will also be understood that the term "and/or" as used herein refers to and encompasses any possible combinations of one or more of the associated listed items. It will be further understood that the terms "includes," "including," "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Further, as used herein, the term "if" may be construed to mean "when" or "upon" or "in response to determining" or "in response to detecting," depending on the context.

Attention is now directed to processing procedures, methods, techniques, and workflows that are in accordance with some embodiments. Some operations in the processing procedures, methods, techniques, and workflows disclosed herein may be combined and/or the order of some operations may be changed.

### System Overview

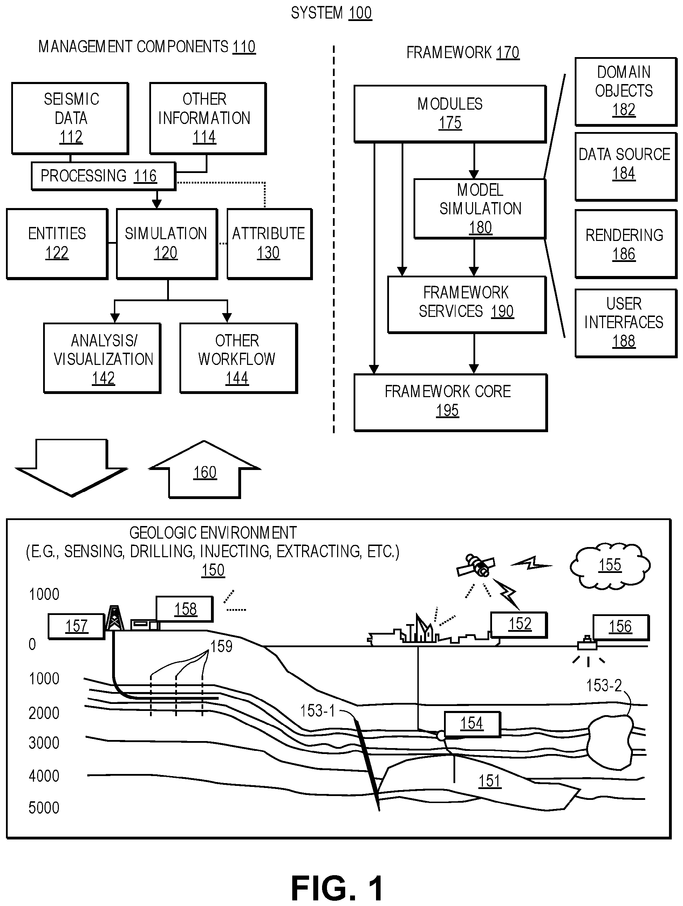

**Figure 1** illustrates an example of a system 100 that includes various management components 110 to manage various aspects of a geologic environment 150 (e.g., an environment that includes a sedimentary basin, a reservoir 151, one or more faults 153-1, one or more geobodies 153-2, etc.). For example, the management components 110 may allow for direct or indirect management of sensing, drilling, injecting, extracting, etc., with respect to the geologic environment 150. In turn, further information about the geologic environment 150 may become available as feedback 160 (e.g., optionally as input to one or more of the management components 110).

In the example of **Figure 1****,** the management components 110 include a seismic data component 112, an additional information component 114 (e.g., well/logging data), a processing component 116 (e.g., including calibration of the processing results with well data), a simulation component 120, an attribute component 130, an analysis/visualization component 142 and a workflow component 144. In operation, seismic data and other information provided per the components 112 and 114 may be input to the simulation component 120. The other information may be or include well data. The components, 112, 114 may be or include well data such as well logs, drilling logs, and/or cores, which may be used to calibrate the seismic data to rock and fluid properties.

In an example embodiment, the simulation component 120 may rely on entities 122. Entities 122 may include earth entities or geological objects such as wells, well data (e.g., used for calibration of rock and fluid properties), surfaces, bodies, reservoirs, etc. In the system 100, the entities 122 can include virtual representations of actual physical entities that are reconstructed for purposes of simulation. The entities 122 may include entities based on data acquired via sensing, observation, etc. (e.g., the seismic data 112 and other information 114). An entity may be characterized by one or more properties (e.g., a geometrical pillar grid entity of an earth model may be characterized by a porosity property). Such properties may represent one or more measurements (e.g., acquired data), calculations, etc.

In an example embodiment, the simulation component 120 may operate in conjunction with a software framework such as an object-based framework. In such a framework, entities may include entities based on pre-defined classes to facilitate modeling and simulation. A commercially available example of an object-based framework is the MICROSOFT^{®} .NET^{®} framework (Redmond, Washington), which provides a set of extensible object classes. In the .NET^{®} framework, an object class encapsulates a module of reusable code and associated data structures. Object classes can be used to instantiate object instances for use in by a program, script, etc. For example, borehole classes may define objects for representing boreholes based on well data.

In the example of **Figure 1****,** the simulation component 120 may process information to conform to one or more attributes specified by the attribute component 130, which may include a library of attributes. Such processing may occur prior to input to the simulation component 120 (e.g., consider the processing component 116). As an example, the simulation component 120 may perform operations on input information based on one or more attributes specified by the attribute component 130. In an example embodiment, the simulation component 120 may construct one or more models of the geologic environment 150, which may be relied on to simulate behavior of the geologic environment 150 (e.g., responsive to one or more acts, whether natural or artificial). In the example of **Figure 1****,** the analysis/visualization component 142 may allow for interaction with a model or model-based results (e.g., simulation results, etc.). As an example, output from the simulation component 120 may be input to one or more other workflows, as indicated by a workflow component 144.

As an example, the simulation component 120 may include one or more features of a simulator such as the ECLIPSE^{™} reservoir simulator (SLB, Houston Texas), the INTERSECT^{™} reservoir simulator (SLB, Houston Texas), etc. As an example, a simulation component, a simulator, etc. may include features to implement one or more meshless techniques (e.g., to solve one or more equations, etc.). As an example, a reservoir or reservoirs may be simulated with respect to one or more enhanced recovery techniques (e.g., consider a thermal process such as SAGD, etc.).

In an example embodiment, the management components 110 may include features of a commercially available framework such as the PETREL^{®} seismic to simulation software framework (SLB, Houston, Texas). The PETREL^{®} framework provides components that allow for optimization of exploration and development operations. The PETREL^{®} framework includes seismic to simulation software components that can output information for use in increasing reservoir performance, for example, by improving asset team productivity. Through use of such a framework, various professionals (e.g., geophysicists, geologists, and reservoir engineers) can develop collaborative workflows and integrate operations to streamline processes. Such a framework may be considered an application and may be considered a data-driven application (e.g., where data is input for purposes of modeling, simulating, etc.).

In an example embodiment, various aspects of the management components 110 may include add-ons or plug-ins that operate according to specifications of a framework environment. For example, a commercially available framework environment marketed as the OCEAN^{®} framework environment (SLB, Houston, Texas) allows for integration of add-ons (or plug-ins) into a PETREL^{®} framework workflow. The OCEAN^{®} framework environment leverages .NET^{®} tools (Microsoft Corporation, Redmond, Washington) and offers stable, user-friendly interfaces for efficient development. In an example embodiment, various components may be implemented as add-ons (or plug-ins) that conform to and operate according to specifications of a framework environment (e.g., according to application programming interface (API) specifications, etc.).

**Figure 1** also shows an example of a framework 170 that includes a model simulation layer 180 along with a framework services layer 190, a framework core layer 195 and a modules layer 175. The framework 170 may include the commercially available OCEAN^{®} framework where the model simulation layer 180 is the commercially available PETREL^{®} model-centric software package that hosts OCEAN^{®} framework applications. In an example embodiment, the PETREL^{®} software may be considered a data-driven application. The PETREL^{®} software can include a framework for model building and visualization.

As an example, a framework may include features for implementing one or more mesh generation techniques. For example, a framework may include an input component for receipt of information from interpretation of seismic data, one or more attributes based at least in part on seismic data, log data, image data, etc. Such a framework may include a mesh generation component that processes input information, optionally in conjunction with other information, to generate a mesh.

In the example of **Figure 1****,** the model simulation layer 180 may provide domain objects 182, act as a data source 184, provide for rendering 186 and provide for various user interfaces 188. Rendering 186 may provide a graphical environment in which applications can display their data while the user interfaces 188 may provide a common look and feel for application user interface components.

As an example, the domain objects 182 can include entity objects, property objects and optionally other objects. Entity objects may be used to geometrically represent wells, surfaces, bodies, reservoirs, etc., while property objects may be used to provide property values as well as data versions and display parameters. For example, an entity object may represent a well where a property object provides log information as well as version information and display information (e.g., to display the well as part of a model).

In the example of **Figure 1****,** data may be stored in one or more data sources (or data stores, generally physical data storage devices), which may be at the same or different physical sites and accessible via one or more networks. The model simulation layer 180 may be configured to model projects. As such, a particular project may be stored where stored project information may include inputs, models, results and cases. Thus, upon completion of a modeling session, a user may store a project. At a later time, the project can be accessed and restored using the model simulation layer 180, which can recreate instances of the relevant domain objects.

In the example of **Figure 1****,** the geologic environment 150 may include layers (e.g., stratification) that include a reservoir 151 and one or more other features such as the fault 153-1, the geobody 153-2, etc. As an example, the geologic environment 150 may be outfitted with any of a variety of sensors, detectors, actuators, etc. For example, equipment 152 may include communication circuitry to receive and to transmit information with respect to one or more networks 155. Such information may include information associated with downhole equipment 154, which may be equipment to acquire information, to assist with resource recovery, etc. Other equipment 156 may be located remote from a well site and include sensing, detecting, emitting or other circuitry. Such equipment may include storage and communication circuitry to store and to communicate data, instructions, etc. As an example, one or more satellites may be provided for purposes of communications, data acquisition, etc. For example, **Figure 1** shows a satellite in communication with the network 155 that may be configured for communications, noting that the satellite may additionally or instead include circuitry for imagery (e.g., spatial, spectral, temporal, radiometric, etc.).

**Figure 1** also shows the geologic environment 150 as optionally including equipment 157 and 158 associated with a well that includes a substantially horizontal portion that may intersect with one or more fractures 159. For example, consider a well in a shale formation that may include natural fractures, artificial fractures (e.g., hydraulic fractures) or a combination of natural and artificial fractures. As an example, a well may be drilled for a reservoir that is laterally extensive. In such an example, lateral variations in properties, stresses, etc. may exist where an assessment of such variations may assist with planning, operations, etc. to develop a laterally extensive reservoir (e.g., via fracturing, injecting, extracting, etc.). As an example, the equipment 157 and/or 158 may include components, a system, systems, etc. for fracturing, seismic sensing, analysis of seismic data, assessment of one or more fractures, etc.

As mentioned, the system 100 may be used to perform one or more workflows. A workflow may be a process that includes a number of worksteps. A workstep may operate on data, for example, to create new data, to update existing data, etc. As an example, a workstep may operate on one or more inputs and create one or more results, for example, based on one or more algorithms. As an example, a system may include a workflow editor for creation, editing, executing, etc. of a workflow. In such an example, the workflow editor may provide for selection of one or more pre-defined worksteps, one or more customized worksteps, etc. As an example, a workflow may be a workflow implementable in the PETREL^{®} software, for example, that operates on seismic data, seismic attribute(s), etc. As an example, a workflow may be a process implementable in the OCEAN^{®} framework. As an example, a workflow may include one or more worksteps that access a module such as a plug-in (e.g., external executable code, etc.).

### Geometry-Aware Borehole Image Augmentation

The method described herein includes three image augmentation techniques, constrained to the 3D physical realm of the borehole: (1) rotation, (2) expansion, and (3) contraction and reflection. Each of these techniques may be applied to the input images. The original label containing the dip, the azimuth, and/or the type of the planar feature identified may be modified consistently to generate new examples of labeled data. This procedure has the potential of augmenting the original dataset with up to 7200 times the original data available.

While conventional image augmentation rotates the images on an axis perpendicular to the image plane, in the borehole rotation process, rotating in the same plane would result in an image that does not represent a planar feature crossing the borehole. Hence, instead, the method may use the borehole axis as a reference to rotate the image. The strategy is to take the first column of the array and move it to the end, while keeping the North/TOH reference in the same place. The number of times this process can be repeated applied may be determined by the horizontal resolution of the borehole imager tool, which may range from 16 to 360 bins/columns.

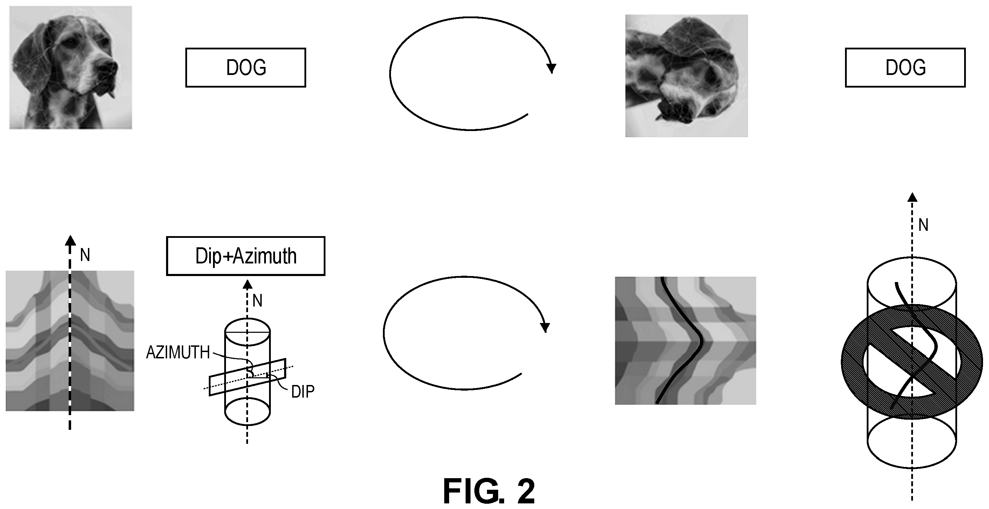

**Figure 2** illustrates data augmentation rotation operations performed on a first image (e.g., of a dog) and on a second image (e.g., of a borehole), according to an embodiment. More particularly, the top row of **Figure 2** shows that a rotation operation can be applied to general images without changing their meaning, and the bottom row of **Figure 2** shows that applying this rotation operation to the borehole image completely changes its geometry, resulting in a lack of physical meaning of the label. In the same tenure, borehole images cannot be freely zoomed in/out, cropped, or flipped without losing real-life meaning. The method applies convolution kernels to expand and contract the complete borehole image while constraining the dimension corresponding to the circumference of the borehole wall. Consequently, the image can be sliced into the fixed size windows to be used as inputs to deep learning algorithms.

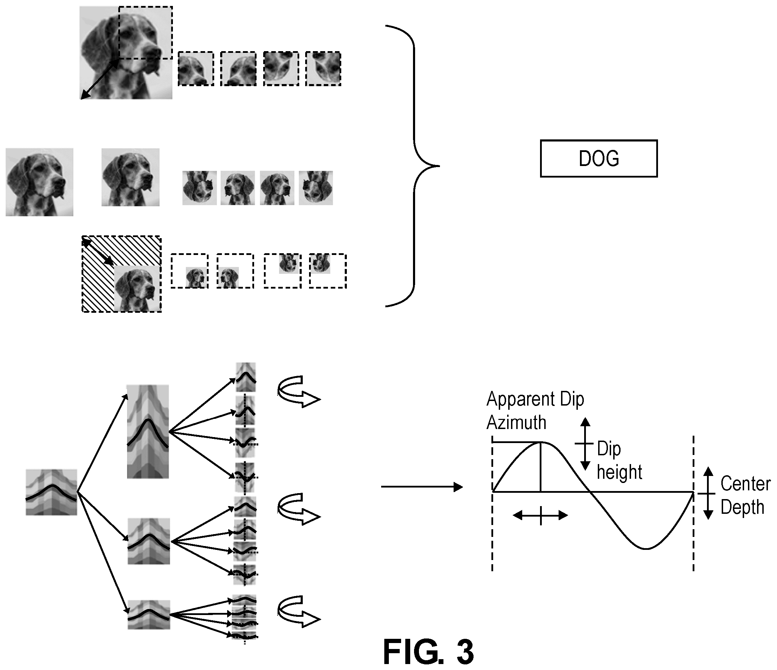

**Figure 3** illustrates data augmentation contraction and expansion operations on the first image (e.g., of the dog) and on the second image (e.g., of the borehole), according to an embedment. More particularly, the top portion of **Figure 3** shows data augmentation operations applied to a general image while preserving the physical meaning of the label, and the bottom portion of **Figure 3** shows the data augmentation operations described herein being used to create new images with different geometry and preserving the physical world meaning of the borehole images labels. By sequentially applying the proposed method, considering the mentioned constraints, and transforming the labels accordingly, the method can augment borehole image data containing geological textures that are hard to replicate, planar features, and their expert-picked classification, which if done manually could quickly sum up to thousands of subject matter expert (SME) hours. These newly generated images can then be fed into other non-geometry modifications to further continue image data augmentation.

A deep learning model may be trained using many examples of labeled data. However, due to the low percentage of wells in which borehole images are acquired, the vast amount of unique geological features, and the few SME's available to identify these structures, data science applications may be limited by insufficient data.

The method described herein addresses this difficulty by generating new labeled data using a consistent set of rules which respect the physical constraints and context of the borehole images. The method includes two steps: altering the image and the label using the same transformation. The transformed label may match the identified structure in the transformed image. Unless stated otherwise, the label parameters that describe the planar feature crossing the wellbore (e.g., centered depth, apparent azimuth, dip height, apparent dip, etc.) may remain unchanged.

### Borehole image rotation

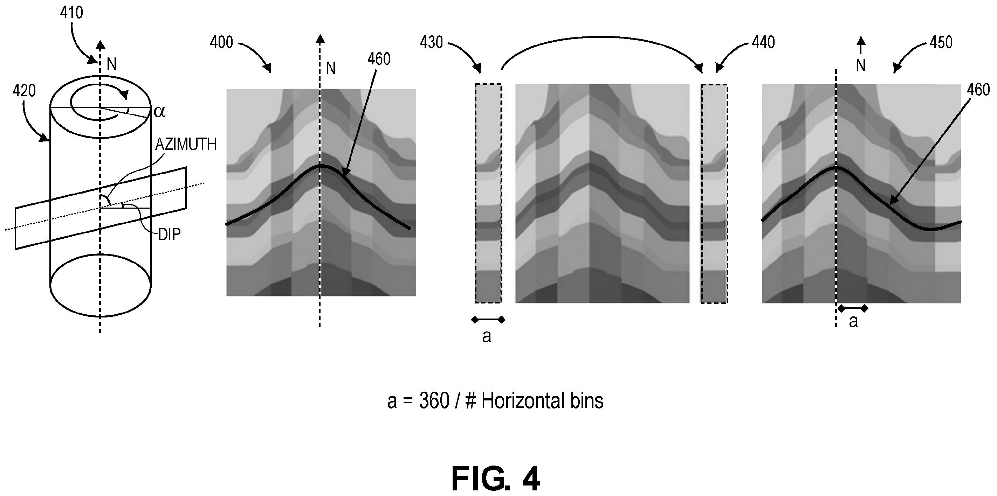

**Figure 4** illustrates borehole image rotation, according to an embodiment. The borehole image 400 may be rotated to produce a rotated image 450. The aim of this process is to rotate the borehole image 400 along the axis 410 of the borehole 420. As a result, the column 430 containing the left-most pixels may be moved to become the right-most column 440, because the reference of the image remains constant. The angular displacement for the apparent azimuth may be equal to the horizontal length (i.e., the width) of the column 430, given by 360° divided by the number of columns on the image 400. This process can be repeated as many times as there are columns in the image 400. This number can vary due to different borehole images having different resolutions.

The curve 460 represents the label defined by sinusoidal function, which may be constructed using the apparent dip azimuth, dip height, and center depth. Said another way, the curve 460 denotes a structure identified in the borehole image 400. The rotation procedure changes the curve's azimuth, as seen in the borehole image 400 and the rotated image 450. The lowest point of the curve 460 has shifted to the left by the width of the column 430.

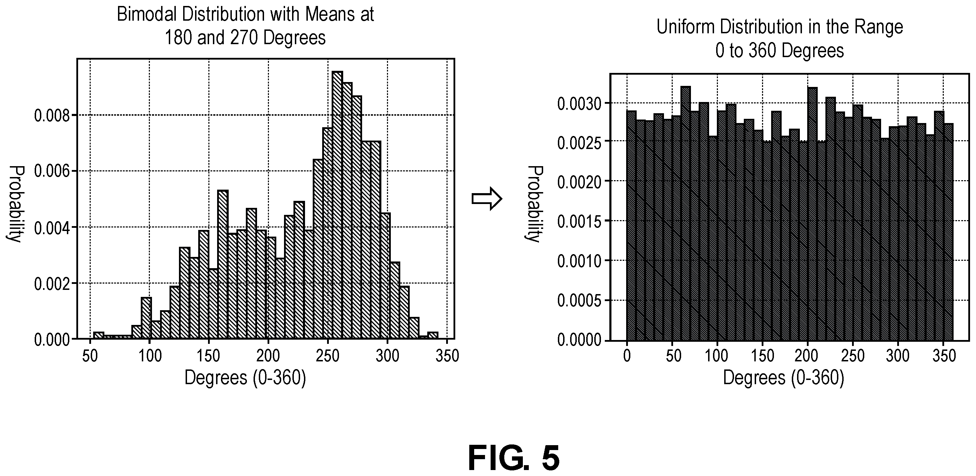

**Figure 5** illustrates the transition from a first graph (e.g., showing bimodal distribution with means at 180 and 270 degrees) to a second graph (e.g., showing unimodal distribution in the range from 0 to 360 degrees, according to an embodiment. Statistically, image rotation allows for a wider azimuth coverage and balance. As the number of rotations grows, it transforms the azimuth's original distribution into uniform.

### Borehole image expansion and contraction

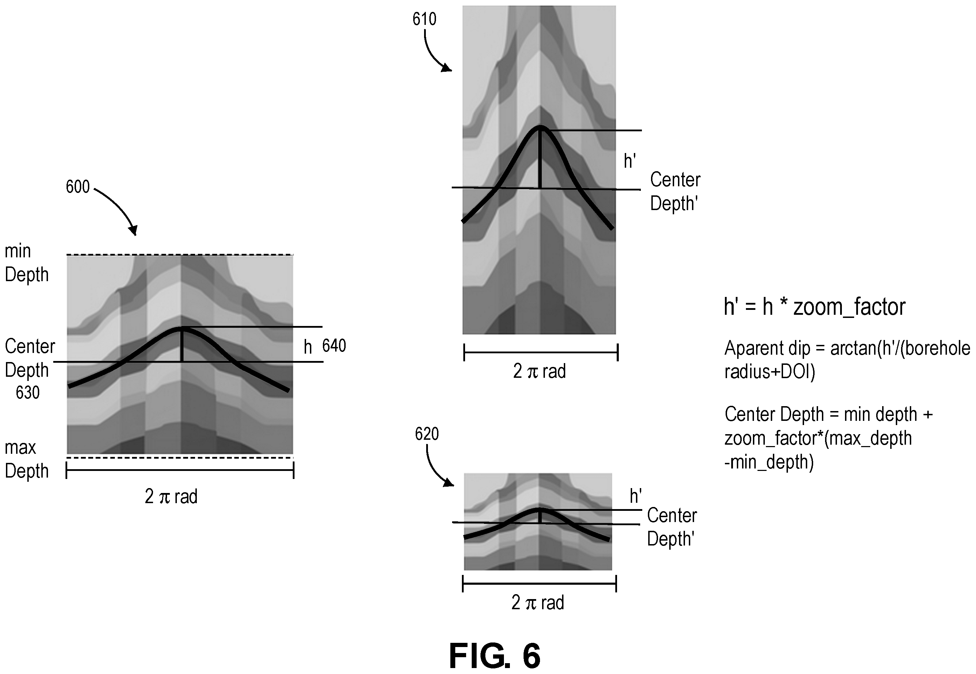

**Figure 6** illustrates borehole image modification (e.g., expansion and/or contraction), according to an embodiment. The borehole image 600 may be modified to produce a modified image (e.g., an expanded image 610 and/or a contracted image 620). To create an expansion or contraction effect, the width of the image 600 (e.g., number of columns) may stay constant, while the number of rows (e.g., depth range) may be proportionally increased or decreased.

To achieve image contraction, a kernel that averages sequential rows may be created. For expansion, an empty row may be inserted between each row and then spline-interpolated. The images are then re-indexed to conserve the same minimum depth. The centered depth values 630 may be proportionally relocated. As the dip height values (h) 640 may have now changed by the same proportion as the zoom factor, their apparent dip may be recalculated by considering the borehole shape and the measurement's depth of investigation. The parameter (h) may be referred to as the distance (e.g., height) between the centered depth and the sinusoid top.

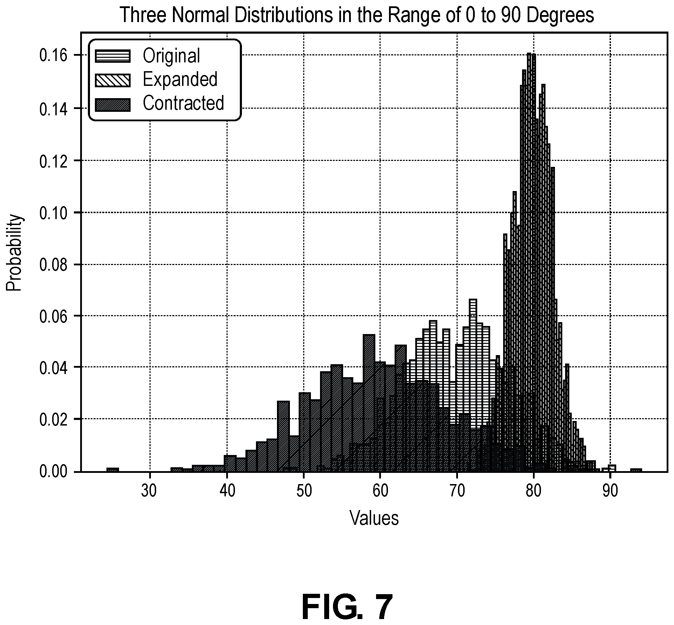

**Figure 7** illustrates a graph showing three normal distributions in the range of 0 to 90 degrees, according to an embodiment. The normal distribution reflects the contraction and expansion methods proposed the method described herein to the original dip height values.

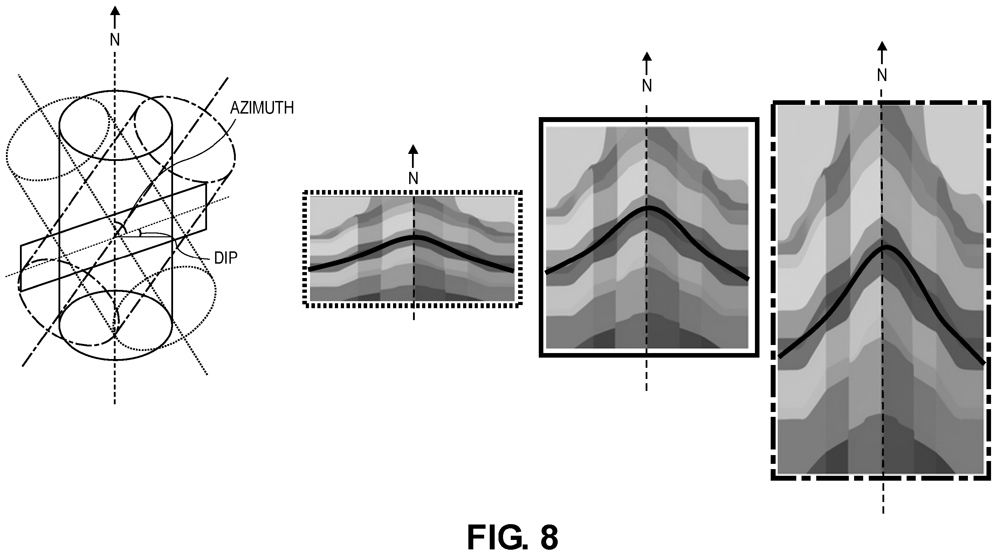

**Figure 8** illustrates three cylinders intersecting the same planar feature, according to an embodiment. The cylinders represent the borehole in different inclinations (e.g., dotted, solid, and dashed), and their corresponding effect(s) on the images (e.g., compressed, original, and expanded). The change in apparent dip may increase the coverage of the dips, as features may tangentially increase their values when the image is expanded. Conversely, the features may decrease their values as the image is contracted. In a real-world application, this may be equivalent to drilling a borehole through the same bedding at different angles.

### Borehole image reflection

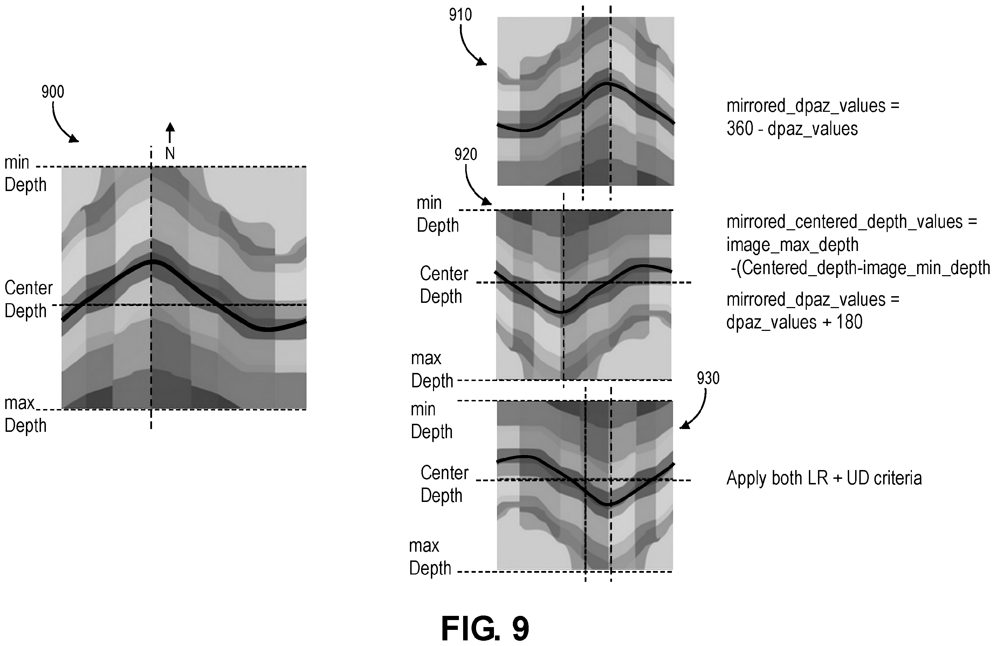

**Figure 9** illustrates borehole image reflection, according to an embodiment. The borehole image 900 may be reflected to produce a reflected image 910, 920, 930. The image reflection process may include reversing the order of either rows, columns, or both, resulting in images symmetric to one of the edges of the original image 900. For left-right mirroring 910 (e.g., along the vertical edge of the image), the apparent azimuth may be updated, which may be equal to 360° minus the original azimuth. For up-down mirroring 920, the azimuth may be rotated 180 degrees, while the centered depth of the image may be determined by the distance to the minimum and maximum depths of the complete image as described in **Figure 9****.** For an image mirrored both up-down and left-right 930, the last two criteria can be applied sequentially in either order.

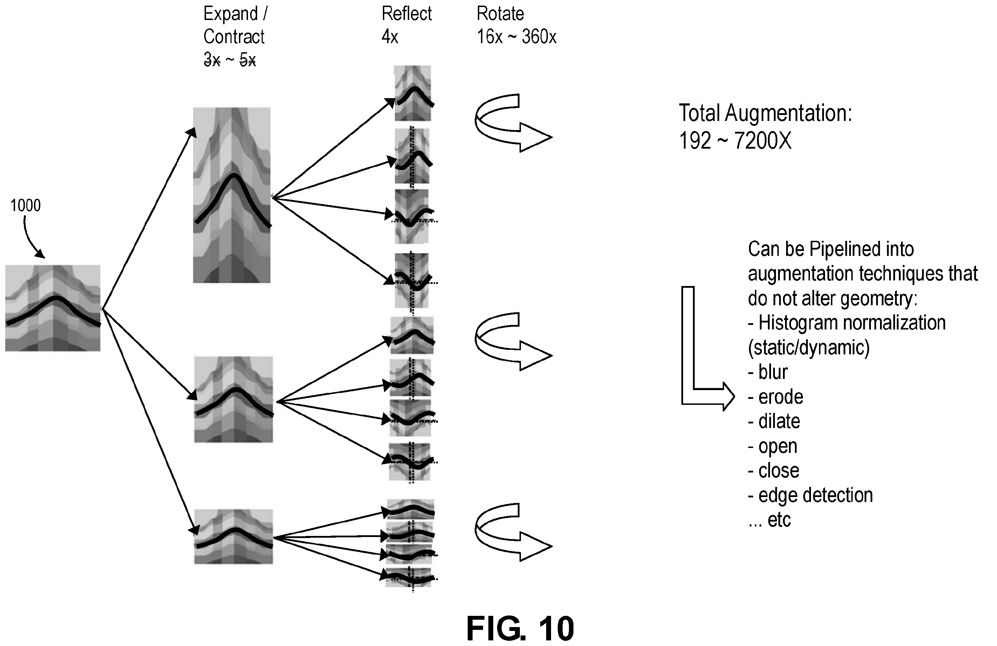

**Figure 10** illustrates the rotation, modification, and reflection of the borehole image 1000 to produce a plurality of augmented images, according to an embodiment. By sequentially applying the proposed technique, depending on the image's vertical and horizontal resolutions, the method can increase the amount of expertly labeled data from 192 times and up to 7200 times. These augmented images can then be fed to non-geometry modifying augmentation processes to further increase the data availability for training deep learning models.

The applications include the ability to train deep learning algorithms on borehole images to extract information such as bedding orientation, fracture characterization, and textural analysis. This can be used for various oil and gas industry activities such as well planning, drilling optimization, and/or geological interpretation and production forecasting. The same techniques may also be used to analyze the core sample images, as their features are similar to the ones found in the borehole images. In this case, the data availability is even less, which can be countered by the high resolution of the images that can be taken once the core reaches the surface.

The improvements over conventional methods include the ability to generate large datasets with consistent labels. Moreover, the method may also enable the training of deep learning algorithms without the extensive manual work involved in conventional feature labeling. A single well interpretation can take from 8 to 40 work hours of an interpreter. This method provides a more efficient analysis of borehole images. It maintains the original interpretation accuracy for the augmented images, leading to better understanding of the geology underlying the wells.

The method can be used as an extension to these technologies or as a standalone tool for image augmentation. The generated data may be used to train other deep learning algorithms that extract high resolution information from borehole images, decreasing interpreter bias on the detected planar features. Other use cases that can be explored are the augmentation of advanced image processing such as resistivity image calibration, matrix extraction, partial fracture detection and aperture calculation, as well as texture analysis, porosity partition (P3A), and vug connectivity analysis. Furthermore, the vast amount of generated data may also be used to create full-wellbore image infilling through GEN-AI methods, leading to more accurate analysis and understanding of geological phenomena.

Overall, the method can improve the effectiveness of borehole imaging techniques in the oil and gas industry by generating large datasets with consistent labels, which can be used by deep learning algorithms without the extensive manual work involved with conventional borehole image dip picking and labeling. This may lead to a better understanding of the geology in the underlying wells and a more accurate analysis of these images, ultimately resulting in improved well planning, drilling optimization, geological interpretation, and productivity forecasting.

### Exemplary method

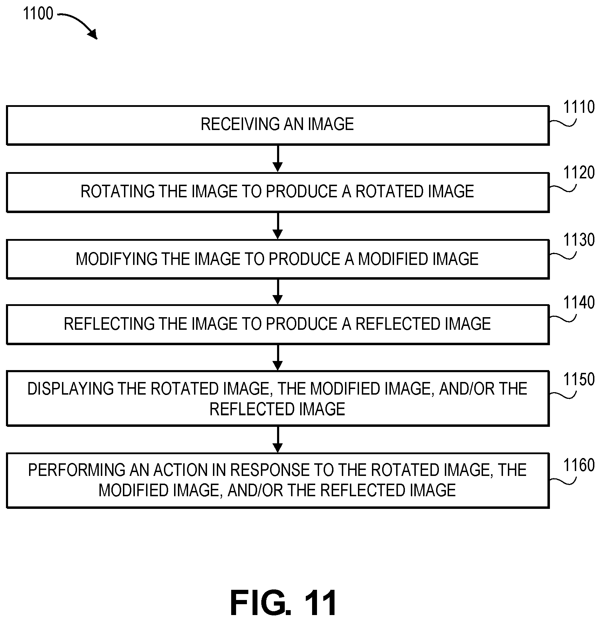

**Figure 11** illustrates a flowchart of a method 1100 for augmenting an interpreted borehole image, according to an embodiment. An illustrative order of the method 1100 is provided below; however, one or more portions of the method 1100 may be performed in a different order, simultaneously, repeated, or omitted. At least a portion of the method 1100 may be performed with a computing system (described below).

The method 1100 may include receiving an image, as at 1110. The image may be of or include a borehole. The image may be interpreted and include a label. The label may be or include a type of a feature, an apparent azimuth, an apparent inclination, a center depth, a dip height, or a combination thereof.

The method 1100 may also include rotating the image to produce a rotated image, as at 1120. An example of this is shown in **Figures 4** **and** **5****.** The image may be rotated along a central longitudinal axis of the borehole. The image may include a plurality of rows and a plurality of columns. Rotating the image causes a left-most of the columns to become a right-most of the columns. An angular displacement for the apparent azimuth may be equal to a width of each of the columns. The apparent azimuth of the label may be rotated by a same angle as the image is rotated.

The method 1100 may also include modifying the image to produce a modified image, as at 1130. An example of this is shown in **Figures 6-8****.** The image may be modified before or after the image is rotated. Modifying the image may include increasing or decreasing a number of the rows while a width of the image and a number of the columns remain constant. Modifying the image displaces the center depth of the label proportionally. Modifying the image expands or contracts the dip height of the label proportionally. In one embodiment, modifying the image may include expanding the image. Expanding the image may include inserting an empty row between each adjacent pair of the rows and then spline interpolating. Expanding the image increases the dip height. In another embodiment, modifying the image may also or instead include contracting the image. Contracting the image may include creating a kernel that averages sequential ones of the rows. Contracting the image decreases the dip height.

The method 1100 may also include reflecting the image to produce a reflected image, as at 1140. An example of this is shown in **Figures 9** **and** **10****.** The image may be reflected before or after the image is rotated. The image may be reflected before or after the image is modified. Reflecting the image may include reversing an order of the rows and/or the columns of the image. Reflecting the image reflects the label accordingly. In one embodiment, reflecting the image may include performing left-right mirroring along a vertical edge of the image. Performing the left-right mirroring rotates the apparent azimuth of the borehole in the image by 360 degrees minus the apparent azimuth of the label. In another embodiment, reflecting the image may also or instead include performing up-down mirroring along a horizontal edge of the image. Performing the up-down mirroring may include rotating the apparent azimuth of the label by 180 degrees. The centered depth in the modified label may be determined proportionally to a distance to a minimum depth and a maximum depth of the image.

The method 1100 may also include displaying the rotated image, the modified image, and/or the reflected image, as at 1150. After augmentation, a wider range of images and their associated features may be created, which may be used to help models generalize better, but without an intrinsic increase in image quality.

The method 1100 may also include performing an action in response to the rotated image, the modified image, and/or the reflected image, as at 1160. The action may be or include selecting a completion site and/or forecasting production. The action may also or instead be or include generating and/or transmitting a signal (e.g., using a computing system) that recommends, instructs, or causes a physical action to occur at a wellsite. The action may also or instead include performing the physical action at the wellsite. The physical action may include selecting where to drill a wellbore, drilling the wellbore, varying a weight and/or torque on a drill bit that is drilling the wellbore, varying a drilling trajectory of the wellbore, varying a concentration and/or flow rate of a fluid pumped into the wellbore, or the like.

### Exemplary Computing System

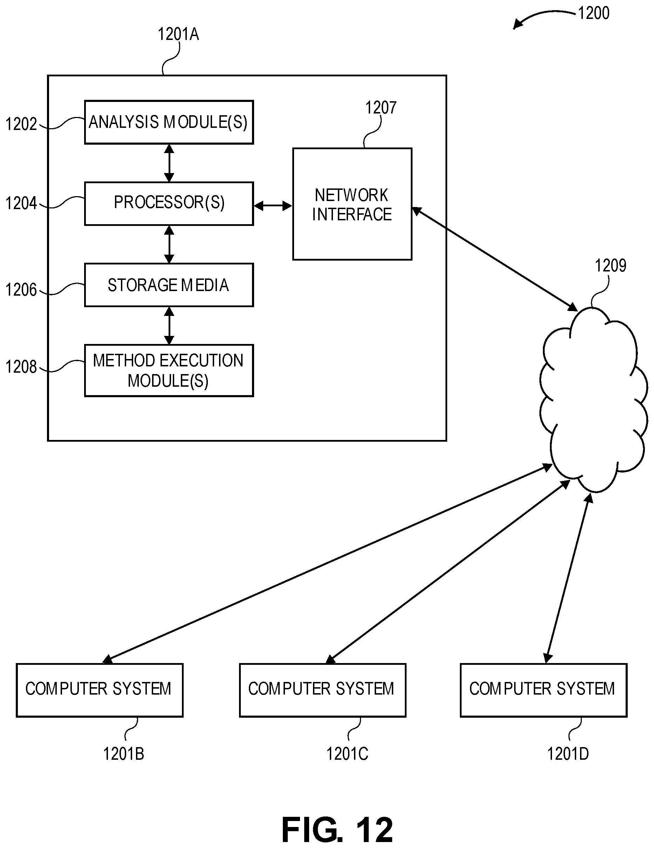

In some embodiments, the methods of the present disclosure may be executed by a computing system. **Figure 12** illustrates an example of such a computing system 1200, in accordance with some embodiments. The computing system 1200 may include a computer or computer system 1201A, which may be an individual computer system 1201A or an arrangement of distributed computer systems. The computer system 1201A includes one or more analysis modules 1202 that are configured to perform various tasks according to some embodiments, such as one or more methods disclosed herein. To perform these various tasks, the analysis module 1202 executes independently, or in coordination with, one or more processors 1204, which is (or are) connected to one or more storage media 1206. The processor(s) 1204 is (or are) also connected to a network interface 1207 to allow the computer system 1201A to communicate over a data network 1209 with one or more additional computer systems and/or computing systems, such as 1201B, 1201C, and/or 1201D (note that computer systems 1201B, 1201C and/or 1201D may or may not share the same architecture as computer system 1201A, and may be located in different physical locations, e.g., computer systems 1201A and 1201B may be located in a processing facility, while in communication with one or more computer systems such as 1201C and/or 1201D that are located in one or more data centers, and/or located in varying countries on different continents).

A processor may include a microprocessor, microcontroller, processor module or subsystem, programmable integrated circuit, programmable gate array, or another control or computing device.

The storage media 1206 may be implemented as one or more computer-readable or machine-readable storage media. Note that while in the example embodiment of **Figure 12** storage media 1206 is depicted as within computer system 1201A, in some embodiments, storage media 1206 may be distributed within and/or across multiple internal and/or external enclosures of computing system 1201A and/or additional computing systems. Storage media 1206 may include one or more different forms of memory including semiconductor memory devices such as dynamic or static random access memories (DRAMs or SRAMs), erasable and programmable read-only memories (EPROMs), electrically erasable and programmable read-only memories (EEPROMs) and flash memories, magnetic disks such as fixed, floppy and removable disks, other magnetic media including tape, optical media such as compact disks (CDs) or digital video disks (DVDs), BLURAY^{®} disks, or other types of optical storage, or other types of storage devices. Note that the instructions discussed above may be provided on one computer-readable or machine-readable storage medium, or may be provided on multiple computer-readable or machine-readable storage media distributed in a large system having possibly plural nodes. Such computer-readable or machine-readable storage medium or media is (are) considered to be part of an article (or article of manufacture). An article or article of manufacture may refer to any manufactured single component or multiple components. The storage medium or media may be located either in the machine running the machine-readable instructions, or located at a remote site from which machine-readable instructions may be downloaded over a network for execution.

In some embodiments, computing system 1200 contains one or more method execution module(s) 1208. In the example of computing system 1200, computer system 1201A includes the method execution module 1208. In some embodiments, a single method execution module may be used to perform some aspects of one or more embodiments of the methods disclosed herein. In other embodiments, a plurality of method execution modules may be used to perform some aspects of methods herein.

It should be appreciated that computing system 1200 is merely one example of a computing system, and that computing system 1200 may have more or fewer components than shown, may combine additional components not depicted in the example embodiment of **Figure 12****,** and/or computing system 1200 may have a different configuration or arrangement of the components depicted in **Figure 12****.** The various components shown in **Figure 12** may be implemented in hardware, software, or a combination of both hardware and software, including one or more signal processing and/or application specific integrated circuits.

Further, the steps in the processing methods described herein may be implemented by running one or more functional modules in information processing apparatus such as general purpose processors or application specific chips, such as ASICs, FPGAs, PLDs, or other appropriate devices. These modules, combinations of these modules, and/or their combination with general hardware are included within the scope of the present disclosure.

Computational interpretations, models, and/or other interpretation aids may be refined in an iterative fashion; this concept is applicable to the methods discussed herein. This may include use of feedback loops executed on an algorithmic basis, such as at a computing device (e.g., computing system 1200, **Figure 12****),** and/or through manual control by a user who may make determinations regarding whether a given step, action, template, model, or set of curves has become sufficiently accurate for the evaluation of the subsurface three-dimensional geologic formation under consideration.

The foregoing description, for purposes of explanation, has been described with reference to specific embodiments. However, the illustrative discussions above are not intended to be exhaustive or limiting to the precise forms disclosed. Many modifications and variations are possible in view of the above teachings. Moreover, the order in which the elements of the methods described herein are illustrated and described may be re-arranged, and/or two or more elements may occur simultaneously. The embodiments were chosen and described in order to best explain the principles of the disclosure and its practical applications, to thereby enable others skilled in the art to best utilize the disclosed embodiments and various embodiments with various modifications as are suited to the particular use contemplated.

## Claims

1. A method for augmenting an interpreted borehole image, the method comprising:
receiving an image of a borehole;
rotating the image to produce a rotated image, wherein the image is rotated along a central longitudinal axis of the borehole;
modifying the image to produce a modified image, wherein modifying the image comprises increasing or decreasing a number of rows in the image while a width of the image and a number of columns in the image remain constant; and
reflecting the image to produce a reflected image, wherein reflecting the image comprises reversing an order of the rows and/or the columns of the image.

2. The method of claim 1, wherein rotating the image causes a left-most of the columns to become a right-most of the columns.

3. The method of claim 1 or 2, wherein the image has been interpreted and comprises a label, wherein the label preferably comprises a type of a feature, an apparent azimuth, an apparent inclination, a center depth, a dip height, or a combination thereof.

4. The method of claim 3, wherein an angular displacement for the apparent azimuth is equal to a width of each of the columns, and wherein the apparent azimuth of the label is rotated by a same angle as the image is rotated.

5. The method of claim 3 or 4, wherein modifying the image displaces the center depth of the label proportionally, and wherein modifying the image expands or contracts the dip height of the label proportionally.

6. The method of any one of the preceding claims, wherein reflecting the image reflects the label accordingly.

7. The method of any one of the preceding claims, wherein the image is modified before or after the image is rotated, wherein the image is reflected before or after the image is rotated, and wherein the image is reflected before or after the image is modified.

8. The method of any one of the preceding claims, further comprising displaying the rotated image, the modified image, and/or the reflected image.

9. The method of any one of the preceding claims, further comprising performing a physical action at a wellsite in response to the rotated image, the modified image, and/or the reflected image, wherein the physical action comprises selecting where to drill a wellbore, drilling the wellbore, varying a weight and/or torque on a drill bit that is drilling the wellbore, varying a drilling trajectory of the wellbore, varying a concentration and/or flow rate of a fluid pumped into the wellbore, or a combination thereof.

10. A computing system, comprising:
one or more processors; and
a memory system comprising one or more non-transitory computer-readable media storing instructions that, when executed by at least one of the one or more processors, cause the computing system to perform operations, the operations comprising:
receiving an image, wherein the image is of a borehole, wherein the image has been interpreted and comprises a label, and wherein the label comprises a type of a feature, an apparent azimuth, an apparent inclination, a center depth, a dip height, or a combination thereof;
rotating the image to produce a rotated image, wherein the image is rotated along a central longitudinal axis of the borehole, wherein the image comprises a plurality of rows and a plurality of columns, wherein rotating the image causes a left-most of the columns to become a right-most of the columns, wherein an angular displacement for the apparent azimuth is equal to a width of each of the columns, and wherein the apparent azimuth of the label is rotated by a same angle as the image is rotated;
modifying the image to produce a modified image, wherein the image is modified before or after the image is rotated, wherein modifying the image comprises increasing or decreasing a number of the rows while a width of the image and a number of the columns remain constant, wherein modifying the image displaces the center depth of the label proportionally, and wherein modifying the image expands or contracts the dip height of the label proportionally; and
reflecting the image to produce a reflected image, wherein the image is reflected before or after the image is rotated, wherein the image is reflected before or after the image is modified, wherein reflecting the image comprises reversing an order of the rows and/or the columns of the image, wherein reflecting the image reflects the label accordingly.

11. The computing system of claim 10, wherein modifying the image comprises expanding the image, wherein expanding the image comprises inserting an empty row between each adjacent pair of the rows and then spline interpolating, and wherein expanding the image increases the dip height and/or wherein modifying the image comprises contracting the image, wherein contracting the image comprises creating a kernel that averages sequential ones of the rows, and wherein contracting the image decreases the dip height.

12. The computing system of claim 10 or 11, wherein reflecting the image comprises performing left-right mirroring along a vertical edge of the image, wherein performing the left-right mirroring rotates the apparent azimuth of the borehole in the image by 360 degrees minus the apparent azimuth of the label and/or wherein reflecting the image comprises performing up-down mirroring along a horizontal edge of the image, wherein performing the up-down mirroring comprises rotating the apparent azimuth of the label by 180 degrees, and wherein the centered depth in the modified label is determined proportionally to a distance to a minimum depth and a maximum depth of the image.

13. A non-transitory computer-readable medium storing instructions that, when executed by one or more processors of a computing system, cause the computing system to perform operations, the operations comprising:
receiving an image, wherein the image is of a borehole, wherein the image has been interpreted and comprises a label, and wherein the label comprises a type of a feature, an apparent azimuth, an apparent inclination, a center depth, a dip height, or a combination thereof;
rotating the image to produce a rotated image, wherein the image is rotated along a central longitudinal axis of the borehole, wherein the image comprises a plurality of rows and a plurality of columns, wherein rotating the image causes a left-most of the columns to become a right-most of the columns, wherein an angular displacement for the apparent azimuth is equal to a width of each of the columns, and wherein the apparent azimuth of the label is rotated by a same angle as the image is rotated;
modifying the image to produce a modified image, wherein the image is modified before or after the image is rotated, wherein modifying the image comprises increasing or decreasing a number of the rows while a width of the image and a number of the columns remain constant, wherein modifying the image displaces the center depth of the label proportionally, wherein modifying the image expands or contracts the dip height of the label proportionally, and wherein modifying the image comprises:
expanding the image, wherein expanding the image comprises inserting an empty row between each adjacent pair of the rows and then spline interpolating, and wherein expanding the image increases the dip height; and/or
contracting the image, wherein contracting the image comprises creating a kernel that averages sequential ones of the rows, and wherein contracting the image decreases the dip height; and
reflecting the image to produce a reflected image, wherein the image is reflected before or after the image is rotated, wherein the image is reflected before or after the image is modified, wherein reflecting the image comprises reversing an order of the rows and/or the columns of the image, wherein reflecting the image reflects the label accordingly, and wherein reflecting the image comprises:
performing left-right mirroring along a vertical edge of the image, wherein performing the left-right mirroring rotates the apparent azimuth of the borehole in the image by 360 degrees minus the apparent azimuth of the label; and/or
performing up-down mirroring along a horizontal edge of the image, wherein performing the up-down mirroring comprises rotating the apparent azimuth of the label by 180 degrees, and wherein the centered depth in the modified label is determined proportionally to a distance to a minimum depth and a maximum depth of the image.

14. The non-transitory computer-readable medium of claim 13, wherein the operations further comprise displaying the rotated image, the modified image, and/or the reflected image and/or wherein the operations further comprise performing an action in response to the rotated image, the modified image, and/or the reflected image, wherein the action preferably comprises selecting a completion site and/or forecasting production.

15. The non-transitory computer-readable medium of claim 13 or 14, wherein the action comprises generating and/or transmitting a signal that recommends, instructs, or causes a physical action to occur at a wellsite, and wherein the physical action comprises selecting where to drill a wellbore, drilling the wellbore, varying a weight and/or torque on a drill bit that is drilling the wellbore, varying a drilling trajectory of the wellbore, varying a concentration and/or flow rate of a fluid pumped into the wellbore, or a combination thereof.
